Europäisches Patentamt

European Patent Office

Office européen des brevets

(19)

(11) Veröffentlichungsnummer: **0 183 278 B1**

# EUROPÄISCHE PATENTSCHRIFT

(12)

(45) Veröffentlichungstag der Patentschrift: **12.06.91**

(51) Int. Cl.⁵: **B29C  45/26**, B29C 45/40

(21) Anmeldenummer: **85115205.8**

(22) Anmeldetag: **30.11.85**

(54) **Verfahren und Vorrichtung zur Herstellung eines langen Kunststoffrohrs durch Spritzguss.**

(30) Priorität: **30.11.84 DE 3443723**

(43) Veröffentlichungstag der Anmeldung:
**04.06.86 Patentblatt  86/23**

(45) Bekanntmachung des Hinweises auf die
Patenterteilung:
**12.06.91 Patentblatt  91/24**

(84) Benannte Vertragsstaaten:
**DE FR GB**

(56) Entgegenhaltungen:
**DE-A- 1 629 720**
**DE-B- 1 158 239**
**FR-A- 1 066 799**
**FR-A- 1 203 501**

(73) Patentinhaber: **Schultheis, Peter A.**
**Richard-Kirchnerstrasse 8**
**W-3590 Bad Wildungen(DE)**

(72) Erfinder: **Der Erfinder hat auf seine Nennung
verzichtet**

(74) Vertreter: **Freiherr von Schorlemer, Reinfried,
Dipl.-Phys.**
**Patentanwalt Brüder-Grimm-Platz 4**
**W-3500 Kassel(DE)**

## Beschreibung

Die Erfindung betrifft ein Verfahren und eine Spritzgußmaschine zur Herstellung von langen Kunststoff-Rohren gemäß den Oberbegriffen der Ansprüche 1 und 5.

Ein bekanntes Verfahren und eine Spritzgußmaschine dieser Art (DE-A-1 629 720) dienen zur Herstellung von Luftpumpengehäusen, die aus Rohren bestehen, die an ihren einen Enden mit je einem quer zur Längsachse abstehenden Schlauchansatz versehen sind, der ein Funktionsteil der Luftpumpe darstellt und mit Hilfe von senkrecht zur Öffnungsbewegung des Spritzwerkzeugs bewegbaren Schiebern angespritzt wird. Die Schieber dienen gleichzeitig dazu, das fertige Spritzteil beim Entformungsvorgang festzuhalten, bei dem zunächst der Kern über eine der Länge des Spritzgießwerkzeugs entsprechende Länge bewegt und dadurch aus dem Rohr herausgezogen wird. Daran anschließend wird der Kern in derselben Richtung nochmals um eine der länge des Spritzgießwerkzeugs entsprechende Strecke bewegt, wobei mittels einer Kupplung dafür gesorgt ist, daß sich bei diesem zweiten Verschiebevorgang auch die Matrize mitbewegt, bis sie vollständig vom fertigen Spritzteil abgezogen ist. Abschließend werden die Schieber derart betätigt, daß das Spritzteil herabfällt bzw. mit der Hand entnommen werden kann.

Wegen der beschriebenen Betätigungen der einzelnen Teile der Spritzgußmaschine beim Entformen muß der Verschiebeweg für den Kern bzw. die ihn tragende Werkzeugplatte wenigstens der doppelten Länge der Matrize entsprechen. Bei der Herstellung von Kunststoff-Körpern, deren langes Rohr eine länge von mehr als etwa 50 cm bei einem Längen-/Durchmesser-Verhältnis von etwa 10:1, vorzugsweise etwa 30:1 aufweist, führt dies zu beachtlichen Längen bzw. Höhen der gesamten Spritzgießvorrichtung, da die Länge bzw. Höhe der Formschließvorrichtung wenigstens etwa dem Dreifachen der Rohrlänge entsprechen muß. Dies ist angesichts der häufig beengten Raumverhältnisse unerwünscht. Abgesehen davon ist die bekannte Vorrichtung nicht zum Herstellen von solchen Kunststoff-Körpern bestimmt, die allein aus einem langen, nahtlosen Rohr bestehen, da zumindest der mittels der Schieber hergestellte Ansatz der Rohre zwei sichtbare Längsnähte aufweist.

Ein anderes bekanntes Verfahren und eine Spritzgußmaschine der genannten Art (FR-A-1 203 501) dienen zur Herstellung der Hülsen von Jagdpatronen, wobei die Hülsen ihren einen Enden ebenfalls mit je einem quer zur Längsrichtung abstehenden Ansatz versehen sind. Die Entformung erfolgt hierbei dadurch, daß zunächst der Kern in einer Richtung aus der Matrize und der in dieser gehaltenen Hülse herausgezogen und dann die auf der Angußseite befindliche Aufspannplatte in entgegengesetzter Richtung um eine so große Strecke verschoben wird, daß die gebildete Hülse mittels eines Aufwerfers od. dgl. aus der Matrize ausgestoßen werden kann Auch in diesem Fall ist der Platzbedarf für den Bewegungshub der beiden verschiebbaren Aufspannplatten mindestens doppelt so groß wie die Länge der Matrize und die gesamte Vorrichtung nicht zur Herstellung von Kunststoff-Rohren ohne radialen Ansatz bestimmt.

Der Erfindung liegt die Aufgabe zugrunde, ein Verfahren und eine Spritzgußmaschine gemäß der eingangs bezeichneten Gattung dahingehend weiterzubilden, daß die Länge bzw. Höhe des Bewegungshubs der Aufspannplatten insgesamt nur etwa dem Doppelten der Länge der Rohre entspricht und auch nur aus Rohren bestehende Kunststoff-Körper ohne jede Längsnaht hergestellt werden können.

Zur Lösung dieser Aufgabe dienen die kennzeichnenden Merkmale der Ansprüche 1 und 5.

Dadurch daß beim Entformungsvorgang erfindungsgemäß zunächst der Kern aus der Matrize herausgezogen und danach die Matrize wieder über den Kern gezogen wird, wird für den Entformungsvorgang lediglich ein etwa der einfachen Rohrlänge entsprechender Bewegungshub benötigt. Außerdem beruht die Erfindung auf der Erkenntnis, daß nur aus langen Rohren bestehende Kunststoff-Körper einfach dadurch hergestellt werden können, daß sie beim Spritzvorgang mit Hilfe der Schieber zunächst mit einem als Halteabschnitt dienenden Ansatz versehen werden, der nach dem Entformungsvorgang abgetrennt wird. Dadurch wird auf der gesamten Rohrlänge eine glatte, glänzende, keine längsnähte aufweisende Oberfläche erzielt.

Vorteilhafte Ausgestaltungen der Erfindung ergeben sich aus den Unteransprüchen.

Die Erfindung wird nachfolgend in Verbindung mit der beiliegenden Zeichnung an einem Ausführungsbeispiel näher erläutert. Es zeigen:

Fig. 1          den allgemeinen Aufbau einer erfindungsgemäßen Spritzgußmaschine;

Fig. 2 bis 5    schematisch das Spritzguß-Werkzeug der Spritzgußmaschine nach Fig. 1 und die einzelnen Verfahrensschritte des erfindungsgemäßen Verfahrens;

Fig. 6 und 7    einen Längsschnitt und einen Querschnitt der Matrize des Werkzeugs nach Fig. 2 bis 5 in Vergrößerung.

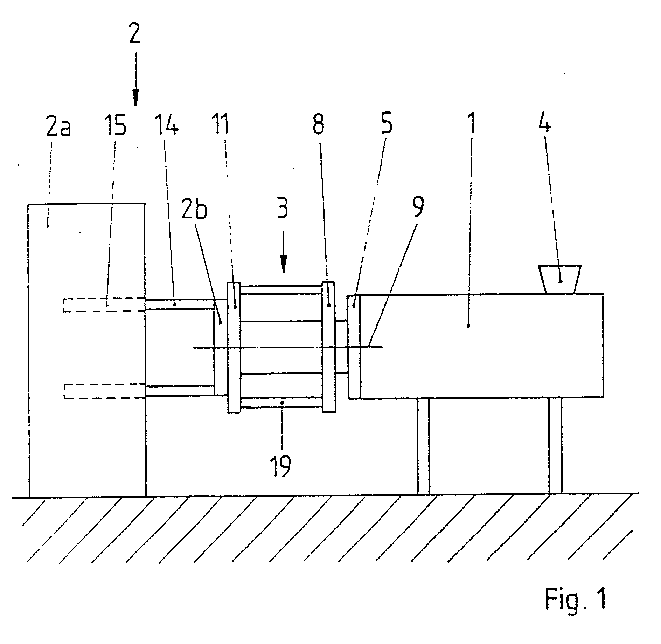

Nach Fig. 1 enthält die erfindungsgemäße Spritzgußmaschine eine Spritzeinheit 1, eine Schließeinheit 2 und ein zwischen beiden angeordnetes Spritzguß-Werkzeug 3. Die Spritzeinheit ist von herkömmlicher Bauweise und weist beispielsweise eine nicht dargestellte Schneckengußvorrichtung auf, der die Kunststoffmasse über einen Einfülltrichter 4 zugeführt wird und die die plastifizierte Kunststoffmasse im Bereich einer ortsfesten Aufspannplatte 5, die mit einer oder mehreren Öffnungen für den Anguß versehen ist, in das Werkzeug 3 eindrückt. Die Schließeinheit2 besteht im Prinzip aus einem ortsfesten Teil 2a und einer beweglichen Aufspannplatte 2b, die mittels nicht dargestellter Führungen parallel zur Längsachse 9 des Werkzeugs 3 hin- und herbewegbar gelagert ist, wobei die Hin- und Herbewegung vorzugsweise mit Hilfe wenigstens einer Zylinder/Kolben-Anordnung 12 erfolgt, die beispielsweise eine parallel zur Längsachse 9 verlaufende und an der beweglichen Aufspannplatte 2b befestigte Kolbenstange 14 und einen an dem ortsfesten Teil 2a befestigten Zylinder 15 aufweist.

Gemäß Fig. 1 bis 5 weist das Werkzeug 3 eine Matrize 6 und einen Kern 7 auf. Die Matrize 6 besteht bei der Herstellung von hohlzylindrischen Rohren aus einem massiven Körper, der an seinem einen, der ortsfesten Aufspannplatte 5 zugeordneten Ende mit einem Flansch 8 versehen ist, mittels nicht dargestellter Führungen parallel zu seiner Längsachse 9 hin- und herbewegbar ist und eine zur Längsachse 9 koaxiale, zylindrische und von einer rundum geschlossenen Wandung umgebene Aufnahmeöffnung 10 aufweist. Die Aufnahmeöffnung 10 dient zur koaxialen Aufnahme des Kerns 7, der einen kleineren Querschnitt als die Aufnahmeöffnung besitzt und mit seinem von der Aufspannplatte 5 entfernten Ende an einer Werkzeugplatte 11 befestigt ist, die ihrerseits an der beweglichen Aufspannplatte 2b der Schließeinheit 2 befestigt ist. Bei geschlossener Maschine legt sich die Werkzeugplatte 11 gegen das von der orstfesten Aufspannplatte 5 entfernte Matrizenende und schließt die zwischen der Wandung der Aufnahmeöffnung 10 und dem Außenmantel des Kerns 7 gebildete Formhöhlung hermetisch ab.

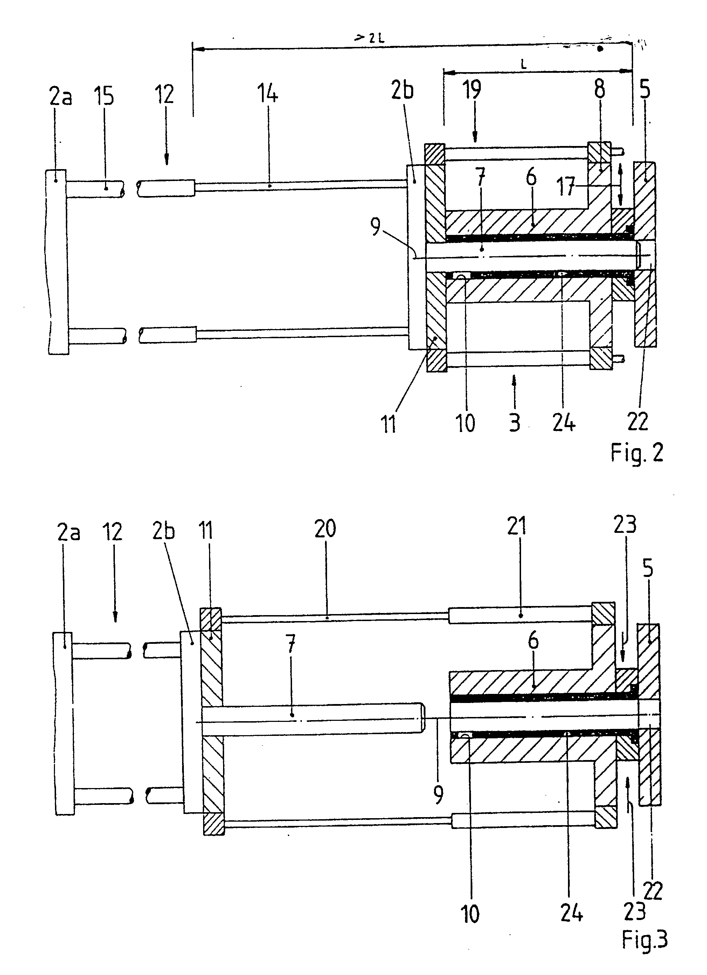

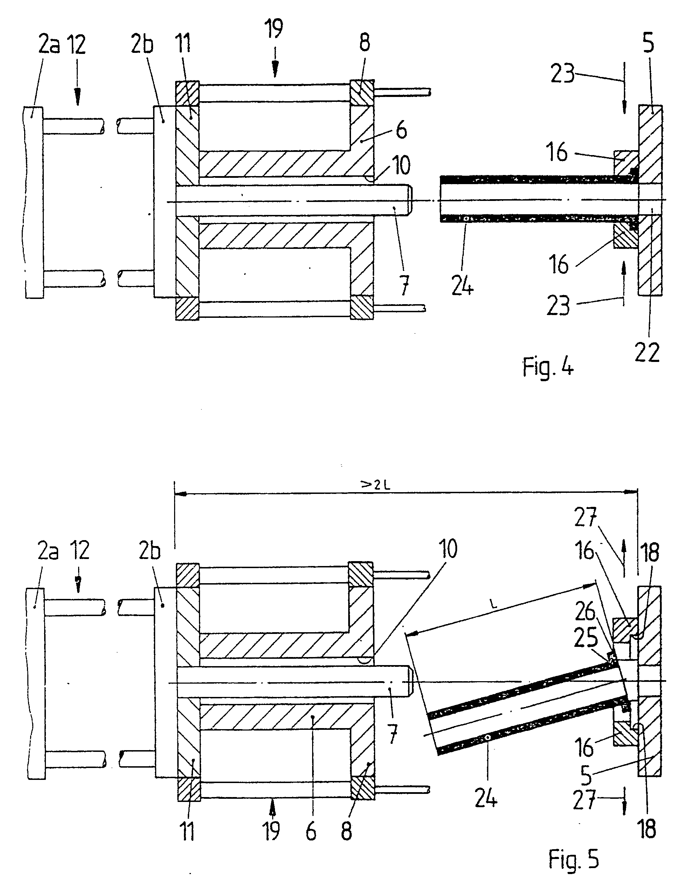

Zwischen der ortsfecten Aufspannplatte 5 und dem dieser zugeordneten Ende der Matrize 6 sind zwei Schieber 16 angeordnet, die senkrecht zur Längsachse 9 in entgegengesetzte Richtungen hin- und herbewegt werden können, wie durch einen Pfeil 17 (Fig. 2) angedeutet ist. Die beiden Schieber 16 sind zweckmäßig mittels nicht dargestellter Führungen auf der ortsfesten Aufspannplatte5 gelagert. An ihren einander und dem Kern 7 zugewandten Enden sind die beiden Schieber 16 so ausgebildet, daß sie in ihrer aus Fig. 2 bis 4 ersichtlichen Schließstellung zusammen mit dem Kern 7 eine Formhöhlung begrenzen, die eine Verlängerung der durch den Kern 7 und die Matrize 6 gebildeten Formhöhlung darstellt. Außerdem weisen die einander zugewendeten Enden der Schieber 16 je eine z.B. ringförmige Ausnehmung 18 (Fig. 5) auf, welche eine wulstartige Verbreiterung gegenüber der übrigen Formhöhlung bildet. Die Schließkraft an dem der Aufnahmeplatte 5 zugeordneten Ende der Matrize 6 wird in radialer Richtung durch nicht dargestellte und auf die Schieber 16 einwirkende Elemente der Antriebsvorrichtung aufgebracht, die zweckmäßig an der Aufspannplatte 5 angeordnet sind.

Durch mindestens eine weitere Zylinder/Kolben-Anordnung 19, die vorzugsweise Bestandteil des Werkzeugs ist und beispielsweise aus einer parallel zur Längsachse 9 angeordneten und an der Werkzeugplatte 11 befestigten Kolbenstange 20 und einem am Flansch 8 der Matrize 6 befestigten Zylinder 21 besteht,kann die Matrize 6 parallel zur Längsachse 9 relativ zur Werkzeugplatte 11 hin- und herbewegt werden.

Bei Durchführung des erfindungsgemäßen Verfahrens werden zunächst Werkzeug und Maschine geschlossen. Dazu bewegt die Zylinder/Kolben-Anordnung 12 die bewegliche Aufspannplatte 2b und die damit verschraubte Werkzeugplatte 11 in Richtung auf die ortsfeste Aufspannplatte 5. Die Werkzeugplatte 11 schiebt dabei die vor ihr verschieblich angeordnete Matrize 6 vor sich her, bis die in Fig. 2 dargestellte Endstellung erreicht ist, während gleichzeitig die Schieber 16 in Richtung von Pfeilen 23 (Fig. 3 und 4) in ihre achsnahe Schließstellung gebracht werden. Mittels der Zylinder-Kolben-Anordnung 12 werden nun die erforderlihenSchließdrücke an den beiden Enden der durch die Matrize 6, den Kern 7, die Schieber 8 und die Aufspannplatte 5 begrenzten Formhöhlung aufgebracht. Danach wird der Spritzvorgang eingeleitet, indem die plastifizierte Kunststoffmasse durch wenigstens eine, in der Aufspannplatte 5 vorgesehene Angußöffnung, die im Bereich des von den Schiebern 16 begrenzten Teils der Formhöhlung endet, in die Formhöhlung eingeleitet wird. Dadurch entsteht in der Formhöhlung ein Rohr 24 (Fig. 5), das an seinem der Aufspannplatte 5 zugeordneten Ende einen durch die Schieber 16 gebildeten Halteabschnitt 25 mit einer wulstförmigen Verbreiterung 26 aufweist.

Nach ausreichender Erstarrung der Kunststoffmasse, jedoch bevor sich diese aufgrund ihrer beim Erkalten fortschreitenden Schwindung zu fest um den Kern 7 gelegt hat, öffnet die Maschine, d.h. die Zylinder/Kolben-Anordnung 12 bewegt die bewegliche Aufspannplatte 2b in Richtung auf das ortsfeste Teil 2a. Sie nimmt dabei die mit ihr verschraubte Werkzeugplatte 11 mit und zieht den Kern 7 entsprechend Fig. 3 aus der Matrize heraus. Die Matrize 6 wird dabei durch die jetzt druckbeaufschlagte Zylinder/Kolben-Anordnung 19 weiterhin gegen die ortsfeste Aufspannplatte 5 gedrückt und ändert ihre Lage nicht. Ebensowenig ändert das Rohr 24 seine Lage, da die noch nicht entformten Schieber 16 im Bereich ihrer Ausnehmungen 18 hinter die als Hinterschneidung wirkende Verbreiterung 26 des Rohrs 24 greifen und dessen Axialverschiebung verhindern. Die Bewegung des Kerns 7 wird unterbrochen, sobald dessen freies Ende die Matrize 6 verlassen hat. Aufgrund der nun verstärkt und schnell einsetzenden Schwindung des Rohrs 24 in radialer Richtung entsteht zwischen dem Außenmantel des Kerns 7 und der Wandung der Aufnahmeöffnung 10 ein umlaufender und über die gesamte Rohrlänge erstreckter Spalt von etwa 0,5 % des Außendurchmessers des Rohres, so daß sich die Matrize 6 und das Rohr 24 nicht mehr berühren. Da auf die Schieber 16 weiterhin der in Richtung der Pfeile 23 wirksame Schließdruck ausgeübt wird, wird das Rohr 24 auch koaxial in der Aufnahmeöffnung 10 gehalten, ohne herunterzufallen.

Durch Umsteuerung der Zylinder/Kolben-Anordnung 19 wird im nächsten Verfahrensschritt die Matrize 6 vom Rohr 24 abgestreift, wobei sie in dieselbe Richtung wie vorher der Kern 7, d.h. in Fig. 4 nach links bewegt wird. Dabei wird die Matrize 6 in nicht dargestellten Führungen parallel zu ihrer Längsachse 9 geführt, so daß sie auch während dieser Bewegung praktisch nicht mit dem durch Schwindung im Querschnitt verkleinerten und durch die Schieber 16 koaxial gehaltenen Rohr 24 in Berührung kommen kann. Gleichzeitig wird die Matrize 6 dabei, wie aus Fig. 4 ersichtlich ist, über den jetzt feststehenden Kern 7 gezogen, der in die Aufnahmeöffnung 10 eindringt. Die Verschiebung der Matrize 6 wird beendet, sobald das freie Rohrende die Matrize 6 verlassen hat.

In einem weiteren Verfahrensschritt werden nun die Schieber 16 in Richtung von Pfeilen 27 (Fig. 5) radial vom Rohr 24 wegbewegt. Hierdurch wird der Halteabschnitt 25 freigegeben, so daß das Rohr 24 herabfällt oder mit der Hand aus der Maschine herausgenommen werden kann. Der Halteabschnitt 25 wird nun abgeschnitten oder auf andere Weise vom Rohr 24 entfernt, so daß dieses jetzt nur noch aus dem durch die Matrize 6 und den Kern 7 gebildeten Teilstück besteht und daher keinerlei Längsnähte oder quer dazu verlaufende Nähte, sondern eine glatte, glänzende und unbeschädigte Oberfläche aufweist.

Bei Anwendung der anhand der Fig. 1 bis 5 beschriebenen Spritzgußmaschine mit dem beschriebenen Werkzeug werden die einzelnen Verfahrensstufen mit Hilfe des Antriebsmechanismus und der Steuervorrichtung weitgehend automatisch durchgeführt, indem die Kolben/Zylinder-Anordnungen 12 und 19 sowie die auf die Schieber 16 einwirkenden Elemente entsprechend gesteuert werden. Zum Herausziehen des Kerns 7 aus der Matrize 6 wird beispielsweise die vorher ausgefahrene Kolbenstange 14 in den Zylinder 15 gezogen, bis die bewegliche Aufspannplatte 2b die aus Fig. 3 ersichtliche Endstellung einnimmt. Während dieser Bewegung wird gleichzeitiger Kolben 21 auf seiner der kolbenstange abgewendeten Seite mit Druck beaufschlagt, so daß die Matrize weiterhin so lange sicher in ihrer bisherigen spritzseitigen Endlage gehalten wird, bis der Kern 7 die Matrize 6 und das Rohr 24 verlassen hat. Soll nun die Matrize vom Rohr abgestreift werden, wird dem Zylinder 21 auf seiner Kolbenstangenseite Druck zugeführt, wodurch die Kolbenstange 20 in den Zylinder 21 und dadurch die Matrize 6 über den Kern 7 gezogen wird. Ist diese aus Fig. 4 ersichtliche Endstellung erreicht, werden die Schieber 16 in Richtung der Pfeile 27 bewegt, um das Rohr 24 freizugeben. Hierzu ist vorzugsweise ein Hand- oder Fußschalter vorgesehen, damit das Rohr 24 nicht automatisch herabfällt und dabei beschädigt wird, sondern nach Öffnung der Maschine zunächst von der Bedienungsperson ergriffen und dann nach Betätigung des Schalters kontrolliert entnommen werden kann.

Die Matrize enthält nach Fig. 2 bis 5 nur eine Aufnahmeöffnung 10. Alternativ ist es möglich, einen Matrizenkörper mit mehreren, z.B. vier entsprechenden Aufnahmeöffnungen vorzusehen, denen je ein Kern und ein entsprechendes Schieberpaar 16 zugeordnet sind. Alle Kerne 7 können dabei am Bauteil 11 befestigt und alle Schieber 16 an der Aufspannplatte 5 gelagert sein. Da wegen der geschlossenen Form der Aurnahmeöffnungen 10 nur relativ kleine Schließkräfte aufzubringen sind, könnten auf diese Weise mehrere Rohre mit einem Schuß hergestellt werden.

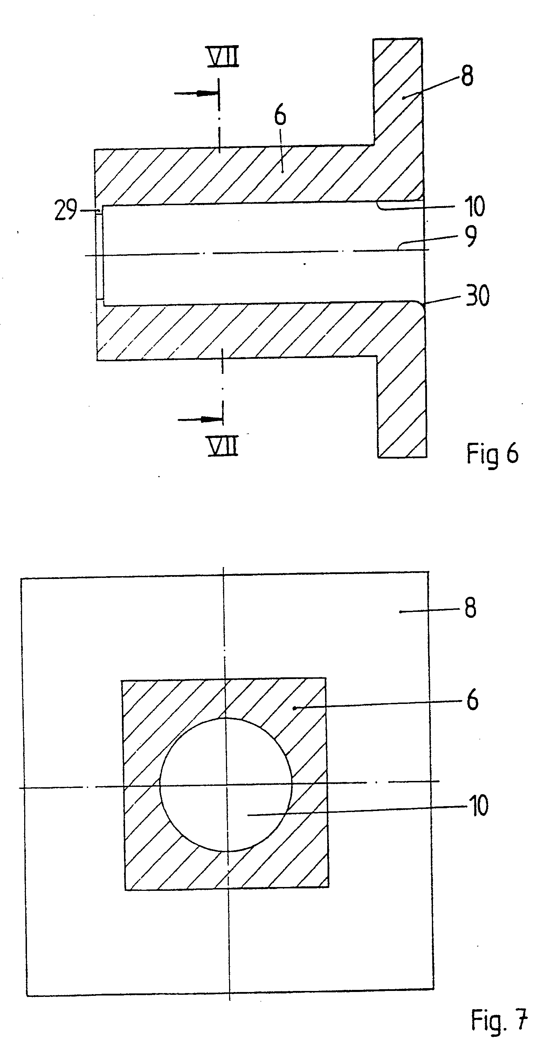

Damit das Rohr 24 beim Herausziehen des Kerns 7 aus der Matrize nicht nur einseitig an seinem Halteabschnitt 25 festgehalten werden braucht, weist die Matrize 6 an ihrem von der Aufspannplatte 5 entfernten Ende zweckmäßig einen radial nach innen ragenden Haltevorsprung 29 auf (Fig. 6), der bei der Herstellung von hohlzylindrischen Rohren zweckmäßig als ringförmiger Kragen ausgebildet ist. Der Haltevorsprung 29 hat die Wirkung, daß er die vom Halteabschnitt entfernte Stirnfläche des Rohrs 24 übergreift und beim Ziehen des Kerns 7 das Rohr 24 festhält. Obwohl der Haltevorsprung 29 auch anstelle des Halteabschnitts 25 zum Festhalten des Rohrs 24 verwendet werden könnte, werden bei der Herstellung von langen Rohren zweckmäßig sowohl der Halteabschnitt 25 als auch der Haltevorsprung 29 vorgesehen, um Eindrücken im Bereich der Stirnfläche des Rohrs oder axiale Stauchungen des Rohrs beim Ziehen des Kerns zu vermeiden.

Die Wandung der Aufnahmeöffnung 10 ist an ihrem der Aufnahmeplatte 5 zugeordneten Ende zweckmäßig etwas abgerundet, wie in Fig. 6 durch das Bezugszeichen 30 angedeutet ist. Diese Maßnahme dient dem Zweck, Beschädigungen der Rohroberfläche auch für den Fall zu vermeiden, daß das Rohr 24 beim Abstreifen der Matrize nicht exakt in seiner koaxialen Lage verbleiben sollte. Abgesehen davon macht sich das erfindungsgemäße Verfahren den Vorteil zunutze, daß sich aufgrund der Temperaturverhältnisse in der Formhöhlung zumindest an dem von der Aufspannplatte 5 entfernten Ende des Rohrs eine geringfügige Aufkelchung ergibt, die beim Abstreifen der Matrize als Führung dienen könnte und dadurch verhindert, daß die Matrize auf der Rohroberfläche schleift.

Die Erfindung ist nicht auf das beschriebene Ausführungsbeispiel beschränkt, das auf vielfache Weise abgewandelt werden kann. Anstelle von Rohren mit zylindrischem Querschnitt können solche mit anderen Querschnitten hergestellt werden. Weiter ist es möglich, das fertige Rohr zusammen mit der Matrize in Richtung des vorher herausgezogenen Kerns zu bewegen und das freie Kernende mit wenigstens einem radial ausfahrbaren Vorsprung zu versehen. In diesem Fall würde das Rohr allmählich aus der Matrize herausgestoßen, sobald sich seine eine Stirnseite gegen den nach dem Ziehen des Kerns ausgefahrenen Vorsprung legt und die Matrize weiter über den Kern geschoben wird. Anstatt der in der Zeichnung dargestellten Horizontalanordnung der Matrize und des Kerns könnte auch eine Vertikalanordnungdes Werkzeugs vorgesehen sein. Anstelle der beiden beweglichen Schieber 16 könnten ein ortsfester und ein beweglicher Schieber vorgesehen sein, in welchem Fall das Rohr mit einem Halteabschnitt versehen würde, der nur einen halbringförmigen Wulst aufweist. Dabei ist es auch möglich, die Schieber statt mit einer Ausnehmung mit einem wulstförmigen Vorsprung zu versehen und dadurch einen Halteabschnitt anzuformen, der eine ringförmige Nut aufweist. Auch auf diese Weise würde eine in Richtung der Längsachse 9 formschlüssige Verbindung zwischen dem Rohr und den Schiebern geschaffen, die das Rohr beim Herausziehen des Kerns axial fixiert.

Ein besonderer Vorteil der erfindungsgemäßen Spritzgußmaschine mit Werkzeug ergibt sich aus Fig. 2 und 5, in denen die Länge des herzustellenden Rohrs mit dem Bezugszeichen "L" angegeben ist. Zu jedem Zeitpunkt während der Ausübung des erfindungsgemäßen Verfahrens reicht nämlich für die Bewegungen des Kerns 7 bzw. der Matrize 6 ein Raum aus, der wenig größer als das Doppelte der Länge "L" ist. Da der Kern und die Matrize auch zum Zwecke der Entformung nur jeweils um eine Strecke entsprechend der Länge "L" verschoben werden und die Verschiebebewegung für beide Teile in dieselbe Richtung erfolgt, ist der Raumbedarf minimal.

Grundsätzlich könnte man die Anordnung auch umkehren und den Kern auf der Spritzseite, die Matrize samt Schiebern dagegen auf der Schließseite anordnen. In diesem Falle würde die Matrize mit Rohr nach links vom stehenbleibenden Kern abfahren und anschließend die Matrize nach rechts vom Rohr ab- und wieder auf den Kern auffahren.

Die Erfindung betrifft im übrigen die Herstellung von Rohren, die nicht nur lang, sondern auch dünnwandig sind und ein Durchmesser-Wandstärke-Verhältnis von mindestens etwa 7:1 aufweisen.

## Ansprüche

1. Verfahren zur Herstellung eines langen Kunststoff-Rohrs (24) mit einer Länge von etwa 50 cm und einem Längen-Durchmesser-Verhältnis von wenigstens etwa 10 : 1 bei gleichzeitigem Fehlen einer inneren und äußeren Konizität durch Spritzguß, wobei mit einer Matrize (6), die eine Aufnahmeöffnung (10) mit einer längs ihres Umfangs geschlossenen Wandung autweist, und einem in diese Aufnahmeöffnung (10) einführbaren Kern (7) eine der Rohrform entsprechende Formhöhlung gebildet, eine plastifizierte Spritzgußmasse in die Formhöhlung eingeführt und nach dem Erstarren derselben eine Entformung vorgenommen wird, indem zunächst der Kern (7) aus der Matrize (6) und dem in dieser gehaltenen Rohr (24) herausgezogen und dann nach einer radialen Schwindung des Rohrs (24) die Matrize (6) vom Rohr (24) getrennt wird, dadurch gekennzeichnet, daß die Matrize (6) zur Trennung vom Rohr (24) wieder über den Kern (7) gezogen wird.

2. Verfahren nach Anspruch 1, dadurch gekennzeichnet, daß der Anguß der Spritzgußmasse an einem Ende des Rohrs (24) vorgenommen wird und die Entformung dadurch erfolgt, daß zunächst der Kern (7) am entgegengesetzten Ende des Rohrs aus diesem herausgezogen und dann die Matrize (6) vom Rohr abgestreift und dabei über den Kern (7) gezogen wird.

3. Verfahren nach Anspruch 2, dadurch gekennzeichnet, daß das Rohr (24) beim Abstreifen der Matrize (6) festgehalten wird.

4. Verfahren nach Anspruch 2 oder 3, dadurch gekennzeichnet, daß das Rohr (24) beim Spritzvorgang an seinem für den Anguß gewählten Ende mit einem Halteabschnitt (25) versehen wird, der beim Herausziehen des Kerns (7) und beim Abstreifen der Matrize (6) zum Festhalten des Rohrs benutzt und nach der Entformung des Rohrs abgetrennt wird.

5. Spritzgußmaschine zur Herstellung von langen Kunststoff-Rohren durch Spritzguß mit einer ortsfesten Aufspannplatte (5) an der Spritzseite der Maschine, mit einer beweglichen Aufspannplatte (2b) auf der Schließseite der Maschine, mit einem zwischen den beiden Aufspannplatten angeordneten Spritzguß-Werkzeug (3), das zur Bildung einer rohrförmigen Formhöhlung aus einer eine Längsachse und eine Aufnahmeöffnung (10) aufweisenden Matrize (6) und einem in die Aufnahmeöffnung (10) einführbaren Kern (7) besteht, mit einem Antriebsmechanismus zur Hin- und Herbewegung der beweglichen Aufspannplatte (2b) und des Kerns (7) und/oder der Matrize (6) und mit einer Steuervorrichtung für den Antriebsmechanismus, wobei die Aufnahmeöffnung (10) eine Länge von wenigstens 50 cm und ein Längen-Durchmesser-Verhältnis von wenigstens 10 : 1 aufweist, von einer längs ihres Umfangs geschlossenen, keine Konizität aufweisenden Wandung begrenzt und mit ihrer Längsachse (9) senkrecht zur ortsfesten Aufspannplatte (5) angeordnet ist und wobei der Antriebsmechanismus Mittel zur unabhängigen Verschiebung der beweglichen Aufspannplatte (2b) und der Matrize (6) in zur Längsachse (9) parallelen Richtungen aufweist, dadurch gekennzeichnet, daß die Steuervorrichtung so ausgebildet ist, daß nach einem Spritzvorgang zunächst der ebenfalls keine Konizität aufweisende Kern (7) durch Verschiebung der beweglichen Aufspannplatte (2b) um eine Rohrlänge (L) entsprechende Strecke aus dem gebildeten Rohr (24) und der Matrize (6) herausgezogen und dann die Matrize (6) durch Verschiebung relativ zur verschiebbaren Aufspannplatte (2b) um eine entsprechende Strekke vom Rohr (24) abgestreift und dabei wieder über den Kern (7) gezogen wird.

6. Spritzgußmaschine nach Anspruch 5, dadurch gekennzeichnet, daß das Werkzeug (3) an seinem der Aufspannplatte (5,2b) zugeordneten Ende wenigstens einen senkrecht zur Längsachse (9) beweglichen Schieber (16) aufweist, der an seinem der Matrizenachse zugewandten Ende so ausgebildet ist, daß er in seiner Schließstellung eine zum Anspritzen eines Halteabschnitts bestimmte Formhöhlung begrenzt.

7. Spritzgußmaschine nach Anspruch 5, dadurch gekennzeichnet, daß das Werkzeug (3) an seinem der Aufspannplatte (5,2b) zugeordneten Ende zwei in entgegengesetzte Richtungen und senkrecht zur Längsachse (9) bewegliche Schieber (16) aufweist, deren einander zugewandte Enden so ausgebildet sind, daß sie in der Schließstellung der Schieber (16) eine zum Anspritzen eines Halteabschnitts (25) bestimmte Formhöhlung bilden.

8. Spritzgußmaschine nach Anspruch 6 oder 7, dadurch gekennzeichnet, daß die Schieber (16) mit einer Antriebsvorrichtung verbunden sind und die Steuervorrichtung einen Hand- oder Fußschalter zur Herstellung der Offenstellung der Schieber (16) aufweist.

9. Spritzgußmaschine nach wenigstens einem der Ansprüche 6 bis 8, dadurch gekennzeichnet, daß die Schieberenden so ausgebildet sind, daß der Halteabschnitt (25) aus einer eine wulstförmige Verbreiterung (26) autweisenden Verlängerung des Rohrs (24) besteht.

10. Spritzgußmaschine nach wenigstens einem der Ansprüche 5 bis 9, dadurch gekennzeichnet, daß der Kern (7) mit seinem von der ortsfesten Aufspannplatte (5) entfernten Ende an einer mit der beweglichen Aufspannplatte (2b) verbundenen Werkzeugplatte (11) befestigt ist.

11. Spritzgußmaschine nach Anspruch 10, dadurch gekennzeichnet, daß die bewegliche Aufspannplatte (2b) über wenigstens eine Zylinder/Kolben-Anordnung (12) mit einer parallel zur Längsachse (9) angecrdneten Kolbenstange (14) mit einem ortsfesten Teil (2a) der Maschine verbunden ist.

12. Spritzgußmaschine nach Anspruch 10 oder 11, dadurch gekennzeichnet, daß die Matrize (6) und die Werkzeugplatte (11) durch wenigstens eine Zylinder/Kolben-Anordnung (19) mit einer parallel zur Längsachse (9) angeordneten Kolbenstange (20) miteinander verbunden sind.

13. Spritzgußmaschine nach wenigstens einem der Ansprüche 5 bis 12, dadurch gekennzeichnet, daß die Matrize (6) an ihrem von der Aufspannplatte (5) entfernten Ende mit einem radial nach innen ragenden Haltevorsprung (29) versehen ist.

14. Spritzgußmaschine nach wenigstens einem der Ansprüche 5 bis 13, dadurch gekennzeichnet, daß die mittels der Matrize (6) und des Kerns (7) gebildete Formhöhlung hohlzylindrisch ist.

15. Spritzgußmaschine nach wenigstens einem der Ansprüche 5 bis 14, dadurch gekennzeichnet, daß das Werkzeug (3) zur gleichzeitigen Herstellung mehrerer Rohre eine Mehrzahl von Kernen und eine Matrize mit entsprechend vielen Aufnahmeöffnungen für je einen Kern aufweist.

## Claims

1. A method of manufacturing a long plastics tube (24) with a length of about 50cm and a length-diameter ratio of at least about 10:1, without any internal or external taper, by means of injection moulding, a mould cavity corresponding to the shape of the tube being formed by a matrix (6) having a receiving opening (10) with a wall enclosed along its periphery, and by a core (7) which may be introduced into said receiving opening (10), a plasticised injection mass being introduced into said mould cavity and, after hardening of the same, removal from the mould being undertaken, firstly the core (7) and the tube (24) contained therein being drawn out of the matrix (6) and then, after radial shrinkage of the tube (24), the matrix (6) is separated from the tube (24), characterised in that, in order to separate it from the tube (24), the matrix (6) is again drawn over the core (7).

2. A method according to Claim 1, characterised in that injection of the injection mass is effected at one end of the tube (24), and the removal from the mould is effected in such a way that firstly the core (7) is withdrawn from the tube at the opposite end thereof, and then the matrix (6) is stripped off the tube and drawn over the core (7).

3. A method according to Claim 2, characterised in that the tube (24) is held securely while the matrix (6) is stripped off.

4. A method according to Claim 2 or 3, characterised in that, during the injection procedure, the tube (24) is provided at its end selected for injection with a retainer portion (25), which is used during withdrawal of the core (7) and stripping off of the matrix (6) to hold the tube securely, and is removed after the tube has been removed from the mould.

5. An injection-moulding machine for manufacturing long plastics tubes by injection moulding with a stationary mounting plate (5) on the injection side of the machine, with a movable mounting plate (2b) on the closure side of the machine, with an injection-moulding tool (3) located between both mounting plates, said tool (3) consisting of a matrix (6) having a longitudinal axis and a receiving opening (10), and of a core (7) which may be introduced into the receiving opening (10), in order to form a tubular mould cavity, with a drive mechanism in order to drive reciprocatingly the movable mounting plate (2a) and the core (7) and/or the matrix (6), and with a control device for the drive mechanism, the receiving opening (10) being at least 50cm long, and having a length-diameter ratio of at least 10:1, defined by a wall enclosed along its periphery and having no taper, located with its longitudinal axis (9) perpendicularly to the stationary mounting plate (5), the drive mechanism having means of independent displacement of the movable mounting plate (5) and of the matrix (6) in directions parallel to the longitudinal axis (9), characterised in that the control device is so designed that, after an injection cycle, firstly the likewise non-tapering core (7) is withdrawn by displacement of the movable mounting plate (2b) by a distance corresponding to one tube length (L) out of the tube (24) formed and out of the matrix (6), and then the matrix (6) is stripped from the tube (24) by a corresponding distance, by means of displacement relative to the movable mounting plate (2b), being again drawn over the core (7).

6. An injection-moulding machine according to Claim 5, characterised in that the tool (3) has, on its end associated with the mounting plate (5, 2b) at least one slide (16) displaceable perpendicularly to the longitudinal axis (9), said slide (16) being so formed on its end facing the matrix axis that, in its closed position, it defines a mould cavity intended for injection of a retainer portion.

7. An injection-moulding machine according to Claim 5, characterised in that the tool (3) has, on its end associated with the mounting plate (5, 2b), two slides (16) displaceable in two opposed directions and perpendicularly to the longitudinal axis (9), the ends of said slides facing one another being so formed that, in the closed position, they form a mould cavity intended for injection of a retainer portion (25).

8. An injection-moulding machine according to Claim 6 or 7, characterised in that the slides (16) are connected to a drive device, and the control device has a manual or foot-operated switch in order to produce the open position of the slides (16).

9. An injection-moulding machine according to at least one of Claims 6 to 8, characterised in that the ends of the slides are so formed that the retainer portion (25) consists of an elongation of the tube (24) having a bead-shaped expanded portion (26).

10. An injection-moulding machine according to at least one of Claims 5 to 9, characterised in that the core (7) is attached by its end remote from the stationary mounting plate (5) to a tool plate (11) connected to the movable mounting plate (2b).

11. An injection-moulding machine according to Claim 10, characterised in that the movable mounting plate (2b) is connected to a stationary portion (2a) of the machine by at least one cylinder/piston arrangement (19) with a piston rod (20) disposed parallel to the longitudinal axis (9).

12. An injection-moulding machine according to Claim 10 or 11, characterised in that the matrix (6) and the tool plate (11) are connected together by at least one cylinder/piston arrangement (19) with a piston rod (20) disposed parallel to the longitudinal axis (9).

13. An injection-moulding machine according to at least one of Claims 5 to 12, characterised in that the matrix (6) is provided on its end remote from the mounting plate (5) with a radially inwardly-projecting retainer projection (29).

14. An injection-moulding machine according to at least one of Claims 5 to 13, characterised in that the mould cavity formed by means of the matrix (6) and the core (7) is a hollow cylinder.

15. An injection-moulding machine according to at least one of Claims 5 to 14, characterised in that the tool (3) has a plurality of cores and a matrix with a corresponding number of receiving openings, each for a core, in order simultaneously to produce several tubes.

**Revendications**

1. Procédé pour la fabrication d'un long tuyau en matière plastique (24) d'une longueur d'environ 50 cm et d'un rapport longueur-diamètre d'au moins 10 : 1, sans conicité intérieure et extérieure, par moulage par injection, une cavité de moule correspondant à la forme du tuyau étant réalisée avec une matrice (6) munie d'une ouverture de réception (10) avec une paroi fermée le long de sa périphérie et avec un noyau (7) pouvant être introduit dans ladite ouverture de réception (10) , une masse plastifiée à injecter étant introduite dans la cavité du moule et un démoulage étant effectué après la solidification de ladite masse en retirant tout d'abord le noyau (7) de la matrice (6) et du tuyau (24) maintenu dans celle-ci, puis en séparant la matrice (6) du tuyau (24) après un retrait radial dudit tuyau (24), **caractérisé en ce** que, pour la séparer du tuyau (24), la matrice (6) est à nouveau engagée sur le noyau (7).

2. Procédé selon la revendication 1, caractérisé en ce que l'entrée de la masse à injecter se fait à l'une des extrémités du tuyau (24) et que le démoulage est réalisé en retirant tout d'abord le noyau (7) du tuyau à l'extrémité opposée de celui-ci et en retirant ensuite la matrice (6) dudit tuyau tout en la faisant passer sur le noyau (7).

3. Procédé selon la revendication 2, caractérisé en ce que le tuyau (24) est retenu lors de l'enlèvement de la matrice (6).

4. Procédé selon l'une des revendications 2 ou 3, caractérisé en ce que, lors de l'injection, le tuyau (24) est muni à son extrémité choisie pour l'injection d'une section de retenue (25) qui, lors du retrait du noyau (7) et de l'enlèvement de la matrice (6), est utilisée pour retenir ledit tuyau et coupée après le démoulage du tuyau.

5. Machine à mouler par injection pour la fabrication de longs tuyaux en matière plastique par moulage par injection, comprenant un plateau de serrage stationnaire (5) sur le côté d'injection de la machine, un plateau de serrage mobile (2b) sur le côté de fermeture de la machine, un moule à injection (3) placé entre les deux plateaux de serrage et constitué, pour la formation d'une cavité tubulaire, par une matrice (6) présentant un axe longitudinal et une ouverture de réception (10) et un noyau (7) pouvant être introduit dans l'ouverture de réception (10), un mécanisme d'entraînement pour le mouvement alternatif du plateau de serrage mobile (2b) et du noyau (7) et/ou de la matrice (6), et un dispositif de commande pour le mécanisme d'entraînement, l'ouverture de réception (10) présentant une longueur d'au moins 50 cm et un rapport longueur-diamètre d'au moins 10 : 1, étant délimitée par une paroi fermée le long de sa périphérie qui ne présente aucune conicité, et son axe longitudinal (9) étant orienté perpendiculairement au plateau de serrage fixe (5), et le mécanisme d'entraînement comprenant des moyens pour le déplacement indépendant du plateau de serrage mobile (2b) et de la matrice (6) dans des directions parallèles à l'axe longitudinal (9), **caractérisée en ce** que le dispositif de commande est réalisé de telle façon qu'après une opération d'injection le noyau (7) qui ne présente pas non plus de conicité est tout d'abord retiré du tuyau (24) formé et de la matrice (6) par le déplacement du plateau de serrage mobile (2b) sur une distance correspondant à une longueur de tuyau (L), et que la matrice (6) est ensuite dégagée du tuyau (24) par le déplacement sur une distance correspondante par rapport au plateau de serrage mobile (2b) et emboîtée à nouveau sur le noyau (7).

6. Machine à mouler par injection selon la revendication 5, caractérisée en ce que le moule à injection (3) présente à son extrémité associée au plateau de serrage (5, 2b) au moins un coulisseau (16) déplaçable perpendiculairement à l'axe longitudinal (9) qui est conformé à son extrémité dirigée vers l'axe de la matrice de telle façon qu'il délimite dans sa position de fermeture une cavité du moule destinée à l'injection d'une section de retenue.

7. Machine à mouler par injection selon la revendication 5, caractérisée en ce que le moule à injection (3) présente à son extrémité associée au plateau de serrage (5, 2b) deux coulisseaux (16) déplaçables en sens opposé et perpendiculairement à l'axe longitudinal (9), dont les extrémités dirigées l'une vers l'autre sont conformées de telle façon qu'elles forment dans la position de fermeture des coulisseaux (16) une cavité de moule destinée à l'injection d'une section de retenue (25).

8. Machine à mouler par injection selon l'une des revendications 6 ou 7, caractérisée en ce que les coulisseaux (16) sont couplés avec un dispositif d'entraînement et que le dispositif de commande comprend un commutateur à main ou à pédale pour la réalisation de la position d'ouverture des coulisseaux (16).

9. Machine à mouler par injection selon au moins l'une des revendications 6 à 8, caractérisée en ce que les extrémités des coulisseaux sont conformées de telle façon que la section de retenue (25) est constituée par un prolongement du tuyau (24) qui présente un élargissement (26) en forme de bourrelet.

10. Machine à mouler par injection selon au moins l'une des revendications 5 à 9, caractérisée en ce que le noyau (7) est fixé avec son extrémité éloignée du plateau de serrage fixe (5), sur un plateau porte-moule (11) rattaché au plateau de serrage mobile (2b).

11. Machine à mouler par injection selon la revendication 10, caractérisée en ce que le plateau de serrage mobile (2b) est relié à une partie fixe (2a) de la machine par l'intermédiaire d'au moins un système de cylindre-piston (12) avec une tige de piston (14) disposée parallèlement à l'axe longitudinal (9).

12. Machine à mouler par injection selon l'une des revendications 10 ou 11, caractérisée en ce que la matrice (6) et le plateau porte-moule (11) sont reliés entre eux par au moins un système de cylindre-piston (19) avec une tige de piston (20) disposée parallèlement à l'axe longitudinal (9).

13. Machine à mouler par injection selon au moins l'une des revendications 5 à 12, caractérisée en ce que la matrice (6) est munie à son extrémité éloignée du plateau de serrage (5) d'une saillie de retenue (29) qui dépasse radialement vers l'intérieur.

14. Machine à mouler par injection selon au moins l'une des revendications 5 à 13, caractérisée en ce que la cavité du moule réalisée au moyen de la matrice (6) et du noyau (7) présente une forme de cylindre creux.

15. Machine à mouler par injection selon au moins l'une des revendications 5 à 14, caractérisée en ce que le moule à injection (3) présente, pour la fabrication simultanée de plusieurs tuyaux, une pluralité de noyaux et une matrice avec un nombre correspondant d'ouvertures pour la réception de respectivement un noyau.

Fig. 1

EP 0 183 278 B1

Fig. 2

Fig.3

Fig. 4

Fig. 5

Fig 6

Fig. 7